(19) Europäisches Patentamt
European Patent Office
Office européen des brevets

(11) Publication number: **0 206 515**
**B1**

(12) **EUROPEAN PATENT SPECIFICATION**

(45) Date of publication of patent specification: **19.09.90**

(51) Int. Cl.$^5$: **C 08 L 23/10,** C 08 L 53/00

(21) Application number: **86303836.0**

(22) Date of filing: **20.05.86**

(54) **Production of injection molded polypropylene articles.**

(30) Priority: **21.05.85 JP 109862/85**

(43) Date of publication of application:
**30.12.86 Bulletin 86/52**

(45) Publication of the grant of the patent:
**19.09.90 Bulletin 90/38**

(84) Designated Contracting States:
**DE FR GB IT NL**

(56) References cited:
**EP-A-0 151 883**
**US-A-4 378 404**

**Kobunshi Robunshu, vol. 32, no. 10, Oct 1975; pp. 581-590**

(73) Proprietor: **SUMITOMO CHEMICAL COMPANY, LIMITED**
**Kitahama 4-chome 5-33**
**Chuo-ku Osaka 541 (JP)**

(72) Inventor: **Kakugo, Masahire**
**No. 4-1096-17 Mimomi-cho**
**Narashinno-shi Chiba (JP)**
Inventor: **Wakatsuki, Kizuku**
**No. 1-8-60, Aobadai**
**Ichihara-shi Chiba (JP)**
Inventor: **Tanaka, Shigeo**
**No. 1-13-7, Sakuradai**
**Ishihara-shi Chiba (JP)**
Inventor: **Wakamatsu, Kazuki**
**No. 1-9-926, Yushudai Nishi**
**Ichihara-shi Chiba (JP)**
Inventor: **Tanaka, Kazuo**
**No. 1-9-643, Yushudai Nishi**
**Ichihara-shi Chiba (JP)**

(74) Representative: **Moore, Anthony John et al**
**Gee & Co. Chancery House Chancery Lane**
**London WC2A 1QU (GB)**

**EP 0 206 515 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a process for producing polypropylene injection molded articles having high crystallinity.

Crystalline propylene polymers are excellent synthetic resins having high stiffness and high mechanical strength but have a relatively low rate of crystallization. It has been pointed out that the low crystallinity of polypropylene molded articles causes drawbacks in some fields of application, such as insufficient stiffness or heat resistant and poor transparency due to formation of relatively large spherulities.

Several attempts have been made to improve crystallinity and transparency of propylene polymers. For example, it is known that aluminum salts or sodium salts of aromatic carboxylic acids (Japanese Patent Application (OPI) No. 80329/83, the term "OPI" as herein used means "unexamined published application"); or aromatic carboxylic acids, metal salts of aromatic phosphoric acids or sorbitol derivatives (Japanese Patent Publication No. 12460/80 and Japanese Patent Application (OPI) No. 129036/83)), when added, act as nucleating agents for crystals to thereby improve stiffness and transparency. Of these nucleating agents, aluminum p-t-butylbenzoate which is commonly employed has a considerable effect in improving stiffness but a small effect in improving transparency. Further, sorbitol derivatives, though excellent in improving transparency, give off an offensive smell after molding and are, therefore, limited in their application.

As a result of extensive investigations to overcome the above-described problems, it has now been found that injection molded articles having high stiffness and excellent transparency can be obtained from a crystalline propylene polymer containing a vinylcycloalkane polymer.

According to the present invention there is provided a process for producing a polypropylene molded article comprising molding a crystalline propylene polymer composition containing a polymer of a vinylcycloalkane having 6 or more carbon atoms in an amount of from 0.05 wt ppm to 10,000 wt ppm calculated as a vinylcycloalkane unit characterised by the use of an injection molding machine under conditions of a mold temperature of from 10 to 100°C and an injection pressure of from 29,420 to 147,090 MPa (300 to 1,500 $kg/cm^2$) with at least one point of the cylinder temperature of the injection molding machine falling within a range of from 160 to 350°C.

Our EP—A—0151883 describes compositions of the aforesaid type and it mentions that they can be used for injection molding, but gives no detail of the conditions to be used (which are only specified for compression molding).

The propylene polymer composition which can be used in the present invention can be prepared by (1) blending a vinylcycloalkane polymer and a crystalline propylene polymer or (2) copolymerizing a vinylcycloalkane having 6 or more carbon atoms and propylene or propylene and an α-olefin having from 2 to 18 carbon atoms except for propylene.

The crystalline propylene polymers which can be used in this invention include not only a propylene homopolymer but random or block copolymers of propylene and other α-olefins having from 2 to 18 carbon atoms.

The vinylcycloalkane polymers which can be used in this invention include not only a vinylcycloalkane homopolymer but random copolymers of the vinylcycloalkane and a small proportion of other vinylcycloalkanes or α-olefins and block copolymers of the vinylcycloalkane and α-olefins. The vinylcycloalkane block copolymers are copolymers obtained by multi-stage copolymerization of the vinylcycloalkane and various α-olefins, such as (1) a copolymer obtained by polymerizing the vinylcycloalkane in a first stage and homopolymerizing propylene in a second stage; (2) a copolymer obtained by polymerizing the vinylcycloalkane in a first stage and random copolymerizing propylene and other α-olefins in a second stage; and (3) a copolymer obtained by homopolymerizing propylene in a first stage, polymerizing the vinylcycloalkane in a second stage, and again homopolymerizing propylene or random copolymerizing propylene and other α-olefins in a third stage. In the polymerization of the vinylcycloalkane for the preparation of these block copolymers, the vinylcycloalkane may be copolymerized with a small proportion of other vinylcycloalkanes or α-olefins.

Among these vinylcycloalkanes polymers, the preferred are the block copolymers, and the more preferred are the block copolymers with propylene as described in (1) to (3) above.

The vinylcycloalkane having 6 or more carbon atoms which can be used in the present invention include vinylcyclobutane, vinylcyclopentane, vinyl-3-methylcyclopentane, vinylcyclohexane, vinyl-2-methylcyclohexane, vinyl-3-methylcyclohexane and vinylnorbonane, with those having 8 or more carbon atoms being preferred.

In order to obtain appreciable beneficial effects without altering the physical properties inherent in the crystalline propylene polymer, the content of the vinylcycloalkane unit in the crystalline propylene polymer composition should be from 0.05 wt ppm to 10,000 wt ppm, preferably from 0.5 wt ppm to 5,000 wt ppm, and more preferably from 0.5 wt ppm to 1,000 wt ppm. The content of the α-olefin unit in the composition is appropriately selected according to the application of the resulting injection molded article and preferably is from 0 to 40% by weight based on the composition.

The crystalline propylene polymer composition to be used for injection molding according to the

present invention preferably has a melt flow rate (JIS K6758) of from 0.5 to 150, and more preferably from 1 to 100.

The vinylcycloalkane polymer, crystalline propylene polymer, and vinylcycloalkane/α-olefin/propylene copolymer to be used in this invention can be suitably prepared in the presence of a catalyst system composed of a titanium compound and an organoaluminum compound. The titanium compounds include titanium trichloride catalysts sold by Toyo Stauffer Co., Ltd., Toho Titanium Co., Ltd., Marubeni Solvay Co., Ltd., etc. In addition, titanium compounds carried on magnesium compounds as described in Japanese Patent Application (OPI) Nos. 59916/82 and 133408/80, etc. can also be used to advantage. The organoaluminum compounds preferably include alkylaluminum compounds represented by the formula

$$AlX_aR_{3-a}$$

wherein X represents a hydrogen atom, a halogen atom, or an alkoxy group; R represents an alkyl group having from 1 to 18 carbon atoms; and *a* represents 0 or more but smaller than 3. Specific examples of such alkylaluminum compounds are:

$Al(CH_3)_3$, $Al(C_2H_5)_3$, $Al(C_2H_5)_2Cl$, $Al(C_2H_5)_2Br$, $Al(C_2H_5)_2(OC_2H_5)$,
$Al(C_2H_5)_2(OC_4H_9)$, $Al(C_2H_5)(OC_4H_9)_2$, $Al(C_2H_5)Cl_2$, $Al(C_4H_9)_3$,
$Al(C_4H_9)_2Cl$, $Al(C_6H_{13})_3$, $Al(C_6H_{13})_2Cl$,

and mixtures thereof. For the purpose of improving stereoregularity of the crystalline propylene polymer and the vinylcycloalkane polymers, polymerization may be performed in the presence of an electron donor, e.g., carboxylic esters, phosphoric esters, and cinnamic esters.

Blending of the crystalline propylene polymer and the vinylcycloalkane polymer can be carried out by blending methods employed for blending of general α-olefin polymers. In some detail, powders and/or granular pellets of both polymers are mixed in a Henschel mixer, etc. and melt kneading the blend in a Brabender, a roll, a Banbury mixer, or a granulator.

The crystalline propylene polymer composition which can be used in the present invention can contain, if desired, a wide variety of additives usually compounded into propylene polymers, such as heat stabilizers, light stabilizers, antistatic agents, anti-oxidants, carbon black, pigments and flame retardants. Further, the polymer composition may be blended with other polymers such as low-density polyethylene, high-density polyethylene, polybutene, EP (ethylene/propylene copolymer) and rubber, and fillers such as mica and talc.

The crystalline propylene polymer composition used in the present invention is molded in an injection molding machine commonly employed for propylene polymer compositions under conditions of a mold temperature of from 10 to 100°C and an injection pressure of from 29,420 to 147,090 MPa (300 to 1,500 kg/cm$^2$), with at least one point of the cylinder temperature of the injection molding machine falling within a range of from 160 to 350°C.

This invention is now illustrated in greater detail with reference to the following Examples. In these Examples, physical properties, such as melt flow rate, haze, gloss, [η], and crystallization temperature were determined as follows:

(1) Melt Flow Rate (MFR):
Measured in accordance with JIS K6758.

(2) Intrinsic Viscosity [η]:
Measured in tetralin at 135°C by the use of a Ubbelohd's viscometer.

(3) Crystallization Temperature:
Measured by the use of a differential scanning calorimeter (DSC) at a temperature decrease rate of 4°C/min.

(4) Haze:
A polymer composition was molded in an in-line screw type injection machine manufactured by Sumitomo Heavy Industries Co., Ltd. (Neomat 350/120) into a disc of 1 mm in thickness and 220 mm in diameter. A test piece cut from the disc was measured for haze in accordance with ASTM D1003.

(5) Gloss:
Measured on a test piece as prepared above in accordance with ASTM D532-53T.

(6) Flexural Modulus:
A test piece having a size of 127 mm in length, 12.7 mm in width, and 6.4 mm in thickness was prepared by the use of the same injection molding machine as used in (4) above and measured in accordance with JIS K6758.

(7) Izod Impact Strength:

A test piece having a size of 64 mm in length, 12.7 mm in width, and 6.4 mm in thickness was prepared by the use of the same injection molding machine as used in (4) above and measured in accordance with JIS K6758.

(8) Tensile Strength:

A dumbbell specimen of 3.2 mm in thickness according to ASTM D638-67T I Type was prepared by the use of the same injection molding machine as used in (4) above and measured in accordance with JIS K6758.

(9) Vicat Softening Point (VSP):

A plate having a size of 40 mm in length, 40 mm in width, and 3.2 mm in thickness was prepared by the use of the same injection molding machine as used in (4) above. Measurement was conducted on a test piece cut from the plate in accordance with JIS K7206.

Example 1

(1) Synthesis of Vinylcyclohexane Polymer

To 500 ml of dehydrated and purified n-heptane were successively added 7.5 mmol of diethylaluminum chloride and 50.9 g of a titanium trichloride catalyst produced by Marubeni Solvay Co., Ltd., and the mixture was heated to 60°C, followed by polymerization for 90 minutes while adding dropwise 70 ml of vinylcyclohexane thereto. After completion of the polymerization, the polymer slurry was washed twice each with 500 ml of n-heptane and dried under reduced pressure to obtain 100 g of a titanium trichloride catalyst containing a vinylcyclohexane homopolymer in an amount of 0.96 g per gram.

In a 300 liter-volume autoclave were charged 49.5 g of the above prepared vinylcyclohexane homopolymer-containing catalyst, 1.5 mol of diethylaluminum chloride, and 150 l of n-heptane, and propylene and ethylene were random copolymerized in the autoclave at 50°C under a pressure of 588 kPa G (6 kg/cm$^2$G) for 5 hours. After completion of the polymerization, any unreacted gases were purged, and 30 l of n-butanol was added thereto for deashing. The product was then centrifuged and dried to obtain 36.4 kg of a vinylcyclohexane polymer. This vinylcyclohexane polymer contained 670 wt ppm of a vinylchlorohexane unit and 1.5 wt.% of an ethylene unit and had an intrinsic viscosity [η] of 2.0 dl/g.

(2) Production of injection molded article

Fifty parts (by weight, hereinafter the same) of the vinylcyclohexane polymer obtained in (1) above, 50 parts of an ethylene/propylene random copolymer containing 4.5 wt.% of an ethylene unit and having an MFR of 4.5, 0.05 part of calcium stearate, and 0.05 part of tetrakis(methylene-3(3',5'-di-t-butyl-4-hydroxyphenyl)propionate)methane were mixed in a Henschel mixer and then granulated in a 40 mmφ granulator. The resulting pellets were injection molded, and a test piece was measured for haze. The results obtained are shown in Table 1.

Example 2

Injection molding was carried out in the same manner as described in Example 1-(2) except using 10 parts of the vinylcyclohexane polymer and 90 parts of an ethylene/propylene random copolymer containing 3.1 wt.% of an ethylene unit. The haze of the molded article was measured, and the results are shown in Table 1.

Comparative Example 1

Injection molding was carried out in the same manner as described in Example 1-(2) except using no vinylcyclohexane polymer and 100 parts of an ethylene/propylene copolymer having an ethylene unit of 3.1 wt.%. The haze of the molded article was measured, and the results are shown in Table 1.

Comparative Example 2

Injection molding was carried out in the same manner as described in Example 1-(2) except replacing the vinylcyclohexane polymer with 0.2 part of 1,3,2,4-di(benzylidine)sorbitol produced by New Japan Chemical Co., Ltd. and 100 parts of an ethylene/propylene copolymer containing an ethylene unit of 3.1 wt.%. The haze of the molded article was measured, and the results are shown in Table 1.

TABLE 1

| Example No. | Haze (%) |
|---|---|
| Example 1 | 10 |
| Example 2 | 14 |
| Comparative Example 1 | 37 |
| Comparative Example 2 | 18 |

As is shown in Table 1, the injection molded articles according to the present invention exhibit excellent transparency.

Examples 3 and 4 and Comparative Example 3
(1) Synthesis of vinylcyclohexane polymer

Vinylcyclohexane was homopolymerized in a first stage and then propylene was homopolymerized in a second stage in the same manner as described in Example 1-(1) to obtain 30.1 kg of a vinylcyclohexane polymer containing 1.2 wt.% of a vinylcyclohexane unit and having an [η] of 2.1 dl/g.

(2) Production of injection molded article

To 100 parts of a propylene/ethylene block copolymer containing an ethylene unit of 7.3 wt.% and a melt index of 16 g/10 min were added 0.1 part (Example 3) or 0.7 part (Example 4) of the above prepared vinylcyclohexane polymer and, as additives, 0.05 part of calcium stearate and 0.05 part of tetrakis(methyl-3(3',5'-di-t-butyl-4-hydroxyphenyl)propionate)methane. The mixture was mixed in a Henschel mixer and then granulated in a 40 mmφ granulator. For comparison, a polymer composition was prepared in the same manner as above except that the vinylcyclohexane polymer was not added (Comparative Example 3).

Each of these polymer compositions was injection molded and determined for various physical properties. The results obtained are shown in Table 2 below.

TABLE 2

| Example No. | MFR g/10 min | Izod impact strength 23°C kg · cm/cm² | Izod impact strength −20°C kg · cm/cm² | VSP (°C) | Flexural modulus MPa(kg/cm²) | Tensile strength Yield stress MPa(kg/cm²) | Tensile strength Ultimate stress at failure MPa(kg/cm²) | Tensile strength Ultimate elongation at failure (%) | Tensile strength Gloss (%) |
|---|---|---|---|---|---|---|---|---|---|
| Example 3 | 16 | 6.2 | 3.7 | 82 | 1,402,260 (14,300) | 25005 (255) | 20494 (209) | 85 | 56 |
| Example 4 | 15 | 6.6 | 3.8 | 84 | 1,412,064 (14,400) | 25985 (265) | 20004 (204) | 109 | 55 |
| Comparative Example 3 | 16 | 6.6 | 3.6 | 80 | 1,284,590 (13,100) | 25103 (256) | 18141 (185) | 184 | 53 |

It can be seen from the results of Table 2 that the injection molded articles according to the present invention possess well-balanced physical properties as compared with the conventional injection molded articles.

## Claim

A process for producing a polypropylene molded article, comprising molding a crystalline propylene polymer composition containing a polymer of a vinylcycloalkane having 6 or more carbon atoms in an amount of from 0.05 wt. ppm to 10,000 wt. ppm calculated as a vinylcycloalkane unit characterised by the use of an injection molding machine under conditions of a mold temperature of from 10 to 100°C and an injection pressure of from 29,420 to 147,090 MPa (300 to 1,500 kg/cm$^2$), with at least one point of the cylinder temperature of the injection molding machine falling within a range of from 160 to 350°C.

## Patentanspruch

Verfahren zur Herstellung eines Polypropylenformkörpers durch Gießen einer kristallinen Propylenpolymerzusammensetzung, enthaltend ein Polymer aus einem Vinylcycloalkan mit 6 oder mehr Kohlenstoffatomen in einer Menge von 0,05 Gew.-ppm bis 10 000 Gew.-ppm berechnet als eine Vinylcycloalkaneinheit, gekennzeichnet durch die Verwendung einer Spritzgußmaschine unter Bedingungen einer Gießtemperatur von 10 bis 100°C und einem Spritzdruck von 29 420 bis 147 090 MPa (300 bis 1500 kg/cm$^2$) wobei mindestens ein Punkt der Zylindertemperatur der Spritzgußmaschine in den Bereich von 160 bis 350°C fällt.

## Revendication

Procédé de production d'un article moulé en polyproylène, comprenant le moulage d'une composition de polymère cristallin du propylène contenant un polymère d'un vinylcycloalcane ayant 6 atomes de carbone ou plus en une quantité de 0,05 ppm en poids à 10 000 ppm en poids calculée comme unité de vinylcycloalcane, caractérisé par l'utilisation d'une machine de moulage par injection dans les conditions d'une température de moulage de 10 à 100°C et d'une pression d'injection de 29 420 à 147 090 MPa (300 à 1 500 kg/cm$^2$), la température en au moins un point du cylindre de la machine de moulage par injection étant comprise dans la gamme de 160 à 350°C.